# EUROPÄISCHE PATENTSCHRIFT

(11) **EP 0 649 196 B1**
(45) Veröffentlichungstag und Bekanntmachung des Hinweises auf die Patenterteilung: **29.01.1997**
(21) Anmeldenummer: 94113673.1
(22) Anmeldetag: 01.09.1994
(51) Int. Cl.: H01R 25/14, H01R 25/16, F21S 1/14, G09F 13/28

(54) **Niedervoltinstallationssystem**
Low voltage installation system
Système d'installation à basse tension

(30) Priorität: 06.10.1993 DE 4334067
(43) Veröffentlichungstag der Anmeldung: 19.04.1995
(73) Patentinhaber: Wiegelmann GmbH, D-59823 Arnsberg (DE)
(72) Erfinder: Wiegelmann, Horst, D-59821 Arnsberg (DE)
(74) Vertreter: Köchling, Conrad, Dipl.-Ing.

(56) Entgegenhaltungen:
- WO-A-91/13425
- DE-A- 4 038 902
- FR-A- 2 625 846
- GB-A- 392 278

## Beschreibung

Die Erfindung betrifft ein Niedervoltinstallationssystem, bestehend aus mindestens zwei biegesteifen, parallel zueinander verlegbaren elektrischen, isolationsfreien Leitern, Befestigungs- und Halterungsvorrichtungen zur ortsfesten Anordnung der Leiter, einer mit den Leitern verbindbaren Niedervoltstromquelle sowie an den Leitern mindestens mittelbar befestigbaren und mit diesen elektrisch verbindbaren elektrischen Verbrauchern.

Solche Verbraucher können Leuchten oder andere elektrische Elemente sein.

Derartige Leitungssysteme sind im Stand der Technik vielfach bekannt. Es ist üblich, die Leiter derartiger Installationssysteme geradlinig zu verlegen, so daß ein Installationspfad gebildet ist.

Im Stand der Technik ist es ferner bekannt, Deckenelemente oder dergleichen auszubilden, an denen eine Vielzahl von kleinen Leuchten installiert ist, so daß eine Art "Sternenhimmel" entsteht. Der Installationsaufwand und Verdrahtungsaufwand für derartige Ausführungsformen ist erheblich.

Aus der W0 90/12437 ist ein Niedervoltinstallationssystem bekannt, welches aus zwei parallel und bezogen auf die Montageebene übereinander angeordneten Leiterplatten besteht, wodurch eine Möglichkeit zum Anschluß einer Vielzahl von Verbrauchern wie Leuchten an einer Raumdecke geschaffen ist. Dabei ist dann aber in dem jeweiligen Installationsbereich eine vollflächige Anordnung von relativ groß dimensionierten Leiterplatten notwenig.

Aus der FR-A-2625 846 ist ein Niedervoltinstallationssystem gattungsgemäßer Art bekannt. Dabei sind zwei Leiter parallel zueinander angeordnet, wobei die Leiter bezogen auf die jeweilige Montageebene mit Abstand nebeneinander angeordnet sind. Sofern mit einem solchen Niedervoltinstallationssystem eine Vielzahl von kleinen Leuchten parallel zur Montageebene installiert werden sollen und folglich eine Vielzahl von Kreuzungspunkten parallel zur Montageebene ausgebildet werden müssen, so ist eine äußerst arbeitsintensive Einzelinstallation unter Verwendung von individuellen Elementen erforderlich, da die Kreuzungspunkte in der Ebene jeweils nebeneinander mit Abstand voneinander liegen.

Ausgehend von diesem Stand der Technik liegt der Erfindung die Aufgabe zugrunde, ein Niedervoltinstallationssystem zu schaffen, mit dessen Hilfe relativ einfach eine Vielzahl von Leuchtelementen oder anderen elektrischen Verbrauchern, beispielsweise an einer Raumdecke angeordnet werden können.

Zur Lösung dieser Aufgabe schlägt die Erfindung vor, daß die zueinander parallel stabförmigen Leiter bezogen auf die jeweilige Montageebene mit Abstand übereinander angeordnet sind, so daß ein Leiter näher zur Montageebene hin und einer weiter von der Montageebene weg parallel zu dieser verläuft, das aus einer Vielzahl von solchen Leiterpaaren ein Netzwerk von Leiterpaaren gebildet ist, wobei an den Knotenpunkten die mechanische Halterung und elektrische Verbindung der Leiter jeweils einer Ebene und eine mechanische, elektrisch isolierte Verbindung der Leiter der beiden Ebenen aneinander vorgesehen ist, und daß die Knotenpunkte wahlweise zusätzlich Halterungseinrichtungen zur ortsfesten Befestigung des Installationssystems an der Montageebene und/oder eine Stromeinspeisungsvorrichtung und/oder Halterungsvorrichtungen für elektrische Verbraucher umfassen.

Diese Anordnung ermöglicht es in einfacher Weise ein Netzwerk aus vorgefertigten Elementen zusammenzustellen und zu installieren, wobei durch die Übereinander-Anordnung der Leiter quasi zwei parallel zueinander verlaufende Installationsebenen gebildet sind, die den Zusammenbau und die Gesamtinstallation besonders einfach ermöglichen.

Die erfindungsgemäße Ausgestaltung ermöglicht es zudem, entweder an die Leiter an beliebigen Stellen entsprechende Verbraucher, beispielsweise Leuchten, anzukuppeln, beispielsweise mittels Adaptern, wobei aber vorzugsweise vorgesehen ist, daß lediglich in den Knotenpunkten elektrische Verbraucher, beispielsweise Halogenleuchten angeordnet sind, so daß durch das Netzwerk eine Art "Sternenhimmel" zu erstellen ist.

Um die Installation einfach zu gestalten, ist vorgesehen, daß die Leiter an den Knotenpunkten lösbar befestigt sind.

Die Leiter können an den Knotenpunkten beispielsweise durch Steckverbindung befestigt sein. Auch Rastverbindungen oder andere Verbindungsmöglichkeiten sind brauchbar.

Besonders bevorzugt ist vorgesehen, daß die Knotenpunkte durch Halter aus Isolierstoff gebildet sind, die aus einem ersten, die im Knotenbereich befindlichen Enden der in Einbaulage unteren Leiter untergreifenden Halterteil, einem zweiten diese Enden übergreifenden Halterteil, welches zudem die im Knotenbereich befindlichen Enden der oberen Leiter untergreift, und einem dritten die Enden der oberen Leiter übergreifenden Halterteil bestehen, wobei die Halterteile miteinander lösbar verbindbar sind.

Zur mechanischen Halterung und zur elektrisch isolierten Anordnung der Leiter der beiden Leiterebenen sind derartige Halterausbildungen besonders geeignet, wobei die in den Bereich des Halters einlaufenden Enden der Leiter einer jeden Ebene untereinander elektrisch leitend verbunden sind. Durch die gewählte Ausbildung ist eine modulartige Bauweise ermöglicht, die die Installation erleichtert.

Bevorzugt ist dabei vorgesehen, daß das erste Halterteil aus einer von einem Rohrteil durchsetzten Scheibe besteht, das zweite Halterteil aus einer auf das Rohr aufschiebbaren zweiten Scheibe besteht und das dritte Halterteil aus einer dritten auf das Rohrende aufschraubbaren Scheibe besteht, wobei zwischen den Scheiben die Leiterenden der beiden Leiterebenen einklemmbar sind.

Bei einer derartigen Anordnung ist die Installation vereinfacht, da zunächst die Leiter der ersten Ebene auf das erste Halterteil aufgelegt werden können, anschließend das zweite Halterteil aufgesetzt wird, nachfolgend die Leiter der zweiten Ebene installiert werden und anschließend das dritte Halterteil aufgesetzt wird, wobei dann alle Elemente einschließlich der Leiter mechanisch miteinander verbunden sind. Die elektrische Verbindung der Leiter untereinander kann in Form einer Drahtverbindung oder auch durch Anordnung von entsprechenden elektrisch leitenden Kupplungsstücken erfolgen.

Eine bevorzugte Variante wird darin gesehen, daß an den Leiterenden jeweils ein metallisches Ringelement befestigt ist, welches auf das Rohrteil des ersten Halterteils aufschiebbar ist.

Dadurch, daß an jedem Leiterende ein Ringelement befestigt ist, ist es möglich, das Ringelement beispielsweise auf das Rohrteil eines ersten Halterteils aufzusetzen und nachfolgend die weiteren Ringelemente einer Leiterebene aufzusetzen, im Höchstfall vier solcher Elemente, um einen rechtwinkligen Knotenpunkt mit vier abgehenden Leitern zu schaffen. Dabei kann mindestens eines dieser Ringelemente mit einer Anschlußmöglichkeit für einen flexiblen elektrischen Leiter versehen sein, der zu dem Verbraucheranschluß des Knotenpunktes geführt wird. Auch können an den Ringscheiben Elemente angeformt oder angeordnet sein, die eine ausschließlich rechtwinklige Anordnung der abgehenden Leiter relativ zueinander ermöglicht. Auf die aneinander gelegten Ringelemente der ersten Leiterebene kann dann das zweite Halterteil angelegt werden. Nachfolgend können dann auf das Rohrteil die weiteren Ringelemente der nächsten Leiterebene aufgesetzt werden, wobei auch bei diesen wiederum mindestens eines mit einem flexiblen Leiter verbunden ist, der zum Verbraucheranschluß führt. Zur Fixierung der Teile an dem Rohrteil wird dann das dritte Halterteil aufgesetzt und gegebenenfalls verschraubt oder in anderer Weise befestigt. Die Anordnung von solchen Ringelementen ist insbesondere bei Leitern mit kreisrundem Querschnitt in einfacher Weise möglich, indem ein solches Ringelement eine Anschlußlasche oder einen Aufsteckschuh aufweist, in welchem das jeweilige Leiterende befestigt werden kann.

Eine alternative und unter Umständen bevorzugte Weiterbildung wird darin gesehen, daß an den Leiterenden jeweils ein metallisches Viertelringsegment befestigt ist, welches zwischen das erste und zweite oder zweite und dritte Halterteil einsetzbar ist.

Ein solches Viertelringsegment kann eine relativ große Dicke aufweisen, so daß es möglich ist, in dieses Ringsegment beispielsweise eine Gewindebohrung einzubringen, in die das entsprechende mit Außengewinde versehene Leiterende eingeschraubt werden kann. Es ist auf diese Weise möglich, jeweils an beiden Enden eines Leiters ein derartiges Viertelringsegment anzuordnen und zu befestigten und dann dieses Ringsegment in das Halterteil einzubringen und dort zu fixieren. Der elektrische Kontakt zwischen den Viertelringsegmenten wird dadurch erreicht, daß diese in der Einbausollage miteinander in Berührungskontakt stehen und ggf. durch Elemente der Halterteile auf Anlage gehalten werden. Auch dabei sollte mindestens ein Viertelringsegment einer jeden Installationsebene Anschlußmöglichkeiten für flexible Leiter haben, die zum Verbraucheranschluß geführt sind.

Eine die Installation weiter vereinfachende Maßnahme wird darin gesehen, daß jeweils zwei Viertelringsegmente einander diametral gegenüberliegend an einer Seite einer flachen, metallischen Ringscheibe befestigt oder mit dieser einstückig ausgebildet sind, so daß zwei solcher Bauteile gegensinnig ineinandersteckbar sind und einander zu einem kompletten Ringelement ergänzen, welches aus vier Viertelringsegmenten und zwei axial dazu außenliegenden Ringscheiben besteht.

Bei einer derartigen Ausbildung sind an einer flachen Ringscheibe jeweils diametral gegenüberstehend zwei Viertelringsegmente angeformt oder befestigt, wobei die Viertelringsegmente eine relativ große Höhe aufweisen, so daß das Einstecken oder Einschrauben, was vorzugsweise vorgesehen ist, der Leiterenden möglich ist. Auf diese Weise ist es möglich, die Installation der Leiterelemente einschließlich der Viertelringsegmente an den Haltern in einfacher Weise vorzunehmen, wobei auch insbesondere das Einschrauben der Leiterenden in entsprechende Aufnahmebohrungen der Viertelringsegmente möglich ist, ohne daß hierdurch die Installation komplizierter gestaltet wäre.

In der Einbausollage sind zwei solcher Ringscheiben mit jeweils zwei Viertelringsegmenten gegensinnig zueinander angeordnet und ineinandergesteckt, so daß ein Berührungskontakt zwischen den Viertelringsegmenten und gegebenenfalls den Scheiben besteht. Hierdurch wird der elektrische Kontakt sichergestellt und die Montage zusätzlich vereinfacht.

Vorzugsweise ist dabei vorgesehen, daß jedes Viertelringsegment eine aus seinem Mantel offen ausmündende Gewindebohrung aufweist, in die das mit Außengewinde versehene Ende eines im Querschnitt kreisrunden Leiters einschraubbar ist.

Durch die Schraubverbindung zwischen Leiterende und Viertelringsegment wird ein besonders guter elektrischer Kontakt und gleichzeitig eine hervorragende mechanische Verbindung der Elemente erreicht.

Dabei ist bevorzugt vorgesehen, daß die Ringsegmente eine Höhe aufweisen, die größer als der Durchmesser der im Querschnitt kreisrunden Leiter ist.

Um die Halterung der Viertelringsegmente an dem Halterteil zu verbessern, wird vorgeschlagen, daß von der Scheibe des ersten Halterteils in Richtung zum zweiten Halterteil ein radial außenliegender Kragen abragt, in den der Fuß der Viertelringsegmente gegebenenfalls einschließlich der flachen Scheibe einsetzbar ist, daß das zweite Halterteil beidseitig axial abragende, radial außenliegende Kragen aufweist, welcher Bereich auf dem Kopf der Viertelringsegmente gegebenenfalls einschließlich der flachen Scheibe der unteren Leiterebene aufsetzbar und in welchen der Fuß der Viertelringsegmente gegebenenfalls einschließlich der flachen Scheibe der oberen Leiterebene einsetzbar ist, und daß das dritte Halterteil einen axial in Richtung zum zweiten Halterteil abragenden radial außenliegenden Kragen aufweist, welcher Bereich auf den Kopf der Viertelringsegmente gegebenenfalls samt der flachen Scheibe der zweiten Leiterebene aufsetzbar ist.

Diese Maßnahme ist sowohl bei der Installation vorteilhaft, da durch die Kragen eine gewisse Vorfixierung der Viertelringsegmente am Halterteil erfolgt, wobei zudem auch nach erfolgter Endmontage der feste Zusammenhalt der Teile zusätzlich gefördert wird und insgesamt ein optisch und ästhetisch ansprechendes Bild erzeugt ist.

Bevorzugt ist dabei ferner vorgesehen, daß die Kragen jeweils eine nach radial innen vorspringende Rippe oder dergleichen aufweisen, die einen Einstecktiefenbegrenzungsanschlag für die Viertelringsegmente bzw. die flachen Scheiben bilden.

Um die Zuführung von Anschlußleitungen (Stromversorgung oder zu den Verbrauchern) zu erleichtern, ist zudem vorgesehen, daß das Rohr des ersten Halterteils einen von seinem dem ersten Halterteil abgewandten Ende bis in die Nähe des ersten Halterteils reichenden Längsschlitz aufweist.

Desweiteren ist bevorzugt vorgesehen, daß mindestens eines der Viertelringsegmente des Kreuzungsbereiches einer jeden Leiterebene, vorzugsweise in der dem zweiten Halterteil abgewandten Seite eine Einstecköffnung für das abisolierte Ende einer Anschlußlitze oder dergleichen flexiblen Leiter und eine von radial außen zugängliche, in die Einstecköffnung einschraubbare Klemmschraube aufweist.

Hierdurch ist eine verdeckte Anordnung der Anschlußpunkte für die zum Verbraucher führenden Leitungsverbindungen möglich.

Besonders bevorzugt ist vorgesehen, daß das Rohr des ersten Halterteils über die dem zweiten Halterteil abgewandte Halterseite vorragt und an dem vorragenden Teil ein elektrischer Verbraucher, insbesondere eine Halogenlampe samt Fassung, gehaltert oder in dieses eingesteckt ist.

Desweiteren ist bevorzugt vorgesehen, daß am dem dritten Halterteil zugewandten Ende des Rohres des ersten Halterteils eine Stromeinspeisevorrichtung oder eine Befestigungsvorrichtung zur ortsfesten (z.B. deckenseitigen) Befestigung befestigbar ist.

Ein Ausführungsbeispiel der Erfindung ist in der Zeichnung dargestellt und im folgenden näher beschrieben. Es zeigt:
- Figur 1: ein Netzwerk eines Niedervoltinstallationssystems in Ansicht;
- Figur 2 bis 7: Elemente eines Halterteiles in Ansicht und in Draufsicht;
- Figur 8 bis 11: ein Kupplungselement in unterschiedlichen Ansichten;
- Figur 12: ein Halterteil mit Kupplungselementen und Verbraucher in der Explosionsdarstellung;
- Figur 13: desgleichen in zusammengebautem Zustand;
- Figur 14 und 15: eine Variante eines Kupplungselementes in Schrägansicht und in Draufsicht.

Das Niedervoltinstallationssystem besteht aus zwei biegesteifen, parallel zueinander verlegten elektrischen isolationsfreien Leitern 1, Befestigungs- und Halterungsvorrichtungen 2,3 zur ortsfesten Anordnung der Leiter, einer mit den Leitern 1 verbindbaren Niedervoltstromquelle sowie an den Leitern 1 mindestens mittelbar befestigbaren und mit diesen elektrisch verbindbaren elektrischen Verbrauchern 4, wie Leuchten oder dergleichen.

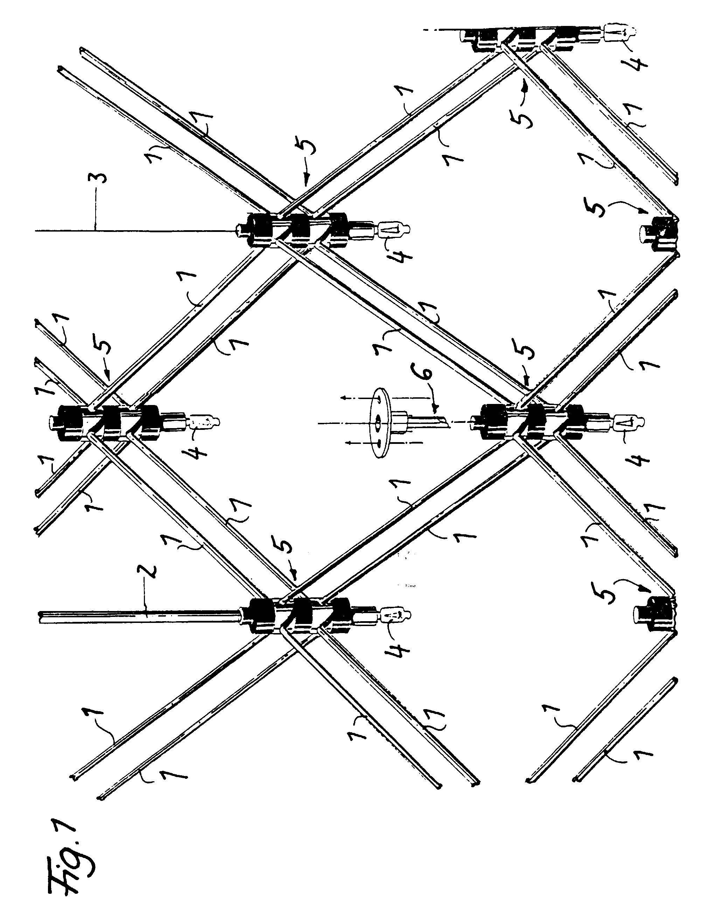

Die zueinander parallelen Leiter 1 sind bezogen auf die jeweilige Montageebene mit Abstand übereinander angeordnet, so daß der eine der beiden Leiter näher zur Montageebene hin und der andere der beiden Leiter 1 weiter von der Montageebene weg, jeweils parallel zu dieser verläuft. Wie insbesondere aus Figur 1 ersichtlich, ist aus einer Vielzahl von solchen Leiterpaaren 1 ein Netzwerk aus sich kreuzenden Leiterpaaren gebildet, wobei die Leiter 1 jeweils durch relativ kurze Stababschnitte gebildet sind.

Beispielsweise können die einzelnen Leiter eine Länge von 150 mm haben.

An den Knotenpunkten 5 ist jeweils die mechanische Halterung und die elektrische Verbindung der Leiter 1 jeweils einer Ebene und eine mechanische, elektrisch isolierte Verbindung der Leiter der beiden Ebenen aneinander vorgesehen. Im Prinzip werden hierdurch zwei voneinander isolierte Leiterebenen auf gespannt. Die Knotenpunkte 5 weisen wahlweise zusätzliche Halterungseinrichtungen zur ortsfesten Befestigung 2,3 und/oder eine Stromeinspeisungsvorrichtung 6 und/oder Halterungsvorrichtungen für elektrische Verbraucher 4 auf.

Die Leiter 1 sind jeweils an den Knotenpunkten 5 lösbar befestigt. Die Knotenpunkte 5 sind durch Halter aus Isolierstoff, beispielsweise Kunststoff, gebildet, die aus einem ersten, die im Knotenpunkt 5 befindlichen Enden der in Einbaulage unteren Leiter 1 untergreifenden Halterteil 7, einem zweiten diese Enden übergreifenden Halterteil 8, welches zudem die im Knotenpunkt 5 befindlichen Enden der oberen Leiter 1 untergreift und einem dritten, die Enden der oberen Leiter 1 übergreifenden Halterteil 9 gebildet sind, wobei die Halterteile 7 bis 9 miteinander lösbar verbunden sind.

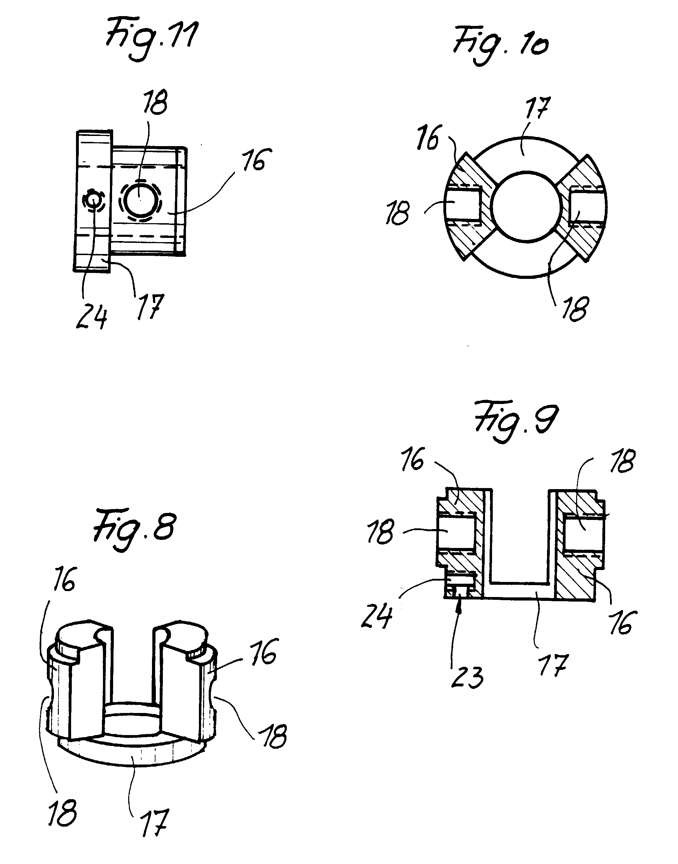

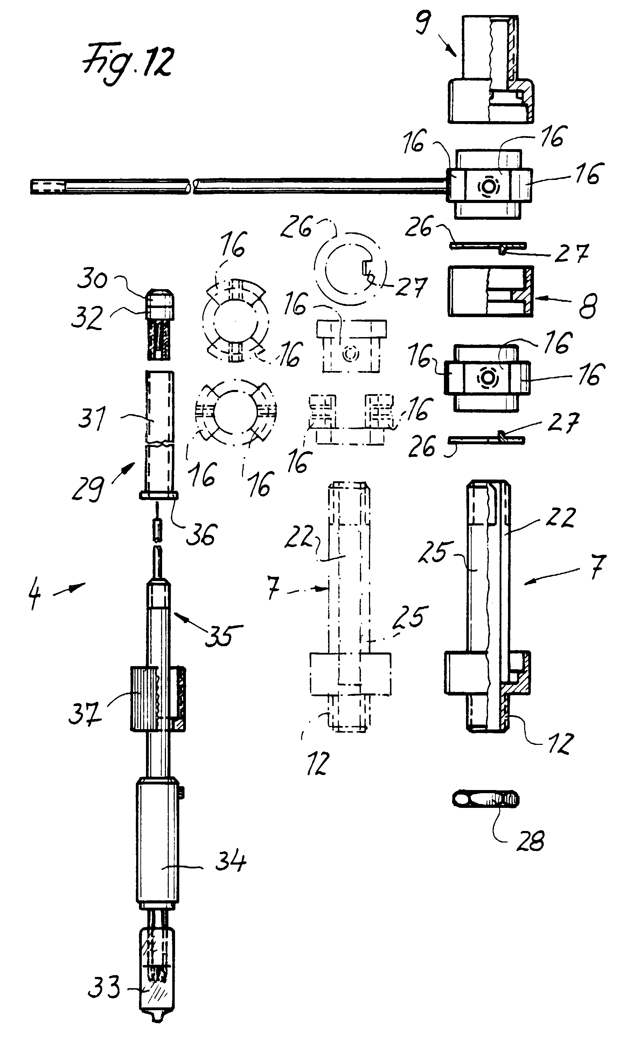

Wie insbesondere aus den Figuren 3 bis 7 ersichtlich, besteht das erste Halterteil 7 aus einer von einem Rohrteil 25 durchsetzten Scheibe 10. Das Rohrteil 25 ragt in Montagesollrichtung nach oben in erheblicher Länge von der Scheibe 10 ab und weist an seinem Ende Gewinde 11 auf. Das Rohrteil 25 ragt aber auch über die andere Seite der Platte 10 der Zeichnungsfigur 2 nach unten ab und weist auch dort Außengewinde 12 auf.

Das zweite Halterteil 8 besteht aus einer auf das Rohr 25 aufschiebbaren zweiten Scheibe 13, während das dritte Halterteil 9 aus einer dritten auf das Rohrende (bei 11) aufschraubbaren Scheibe 14 besteht, die von einem mit Innengewinde versehenen Stutzen 15 durchgriffen ist. Zwischen den Scheiben 10,13,14 sind Kupplungselemente einklemmbar, die die Leiterenden der Leiter 1 der zugehörigen Leiterebene halten.

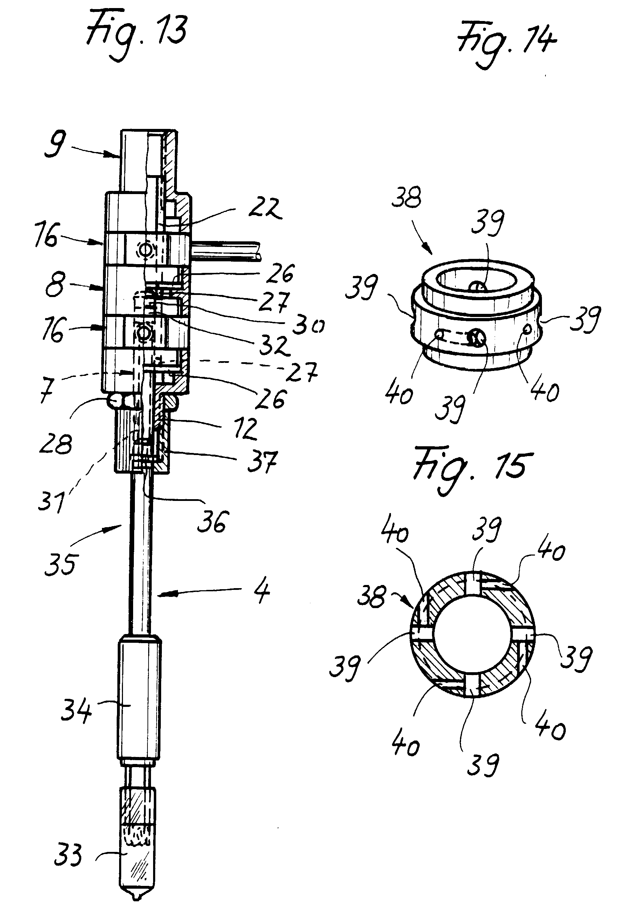

Im Ausführungsbeispiel, insbesondere gemäß Figur 8 bis 11, ist ein Kupplungselement gezeigt, wobei an den Leiterenden der Leiter 1 jeweils ein metallisches Viertelringsegment 16 befestigt ist, welches zwischen das erste und zweite Halterteil 7 bzw. 8 oder das zweite und dritte Halterteil 8 bzw. 9 einsetzbar ist. Dabei sind jeweils zwei Viertelringsegmente 16 einander diametral gegenüberliegend an einer Seite einer flachen metallischen Ringscheibe 17 befestigt oder mit dieser einstückig ausgebildet, so daß zwei solcher Bauteile gegensinnig ineinandersteckbar sind und einander zu einem kompletten ringförmigen Anschlußelement ergänzen, welches aus vier Viertelringsegmenten 16 und zwei axial außen dazu liegenden Ringscheiben 17 besteht. Jedes Viertelringsegment 16 weist eine aus seinem Mantel offen ausmündende Gewindebohrung 18 auf, in die das mit Außengewinde versehene Ende eines im Querschnitt kreisrunden Leiters 1 einschraubbar ist.

Die Ringsegmente 16 weisen eine Höhe auf, die erheblich größer als der Durchmesser der im Querschnitt kreisrunden Leiter 1 ist. Hierdurch ist sichergestellt, daß das Einschrauben der Leiter in die entsprechende Gewindebohrung 18 möglich ist und genügend Material bezüglich des Ringsegmentes 16 vorhanden ist, um eine stabile Anordnung zu gewährleisten.

Um eine lagesichere Anordnung der Ringsegmente 16 in den entsprechenden Halterteilen zu erreichen, ist vorgesehen, daß von der Scheibe 10 des ersten Halterteils 7 in Richtung zum zweiten Halterteil 8 ein radial außenliegender Kragen 19 abragt, in den der Fuß der Viertelringsegmente 16 gegebenenfalls einschließlich der flachen Scheibe 17 einschiebbar ist oder auch bei der Doppelanordnung gemäß Ausführungsform Figur 8 einerseits der Fußbereich der Viertelringsegmente mit der Scheibe 17 und andererseits der Kopfbereich der umgekehrt angeordneten Viertelringsegmente 16 einschiebbar ist, welche dann die Viertelringsegmente zu einem gesamten Ringsegment ergänzen.

Das zweite Halterteil 8 ist beidseitig mit einem axial abragenden und radial außenliegenden Kragen 20 versehen, welche wiederum den Kopf bzw. Fußbereich der Viertelringsegmente 16 gegebenenfalls einschließlich der flachen Scheibe 17 der unteren Leiterebene aufnehmen und in welche der Fuß bzw. Kopf der Viertelringsegmente gegebenenfalls einschließlich der flachen Scheibe 17 der oberen Leiterebene einschiebbar ist. Das dritte Halterteil 9 weist ebenfalls einen Kragen 21 auf, der axial in Richtung zum zweiten Halterteil 8 abragt und radial außen liegt. Dieser Kragen 21 ist auf den Kopf der Viertelringsegmente 16 bzw. den Fuß der umgekehrt angeordneten Viertelringsegmente samt flacher Scheibe 17 der zweiten Leiterebene aufsetzbar. Es wird damit eine eindeutige Lagesicherung auch bei der Montage, also vor dem Anschrauben des dritten Halterteils 9 erreicht.

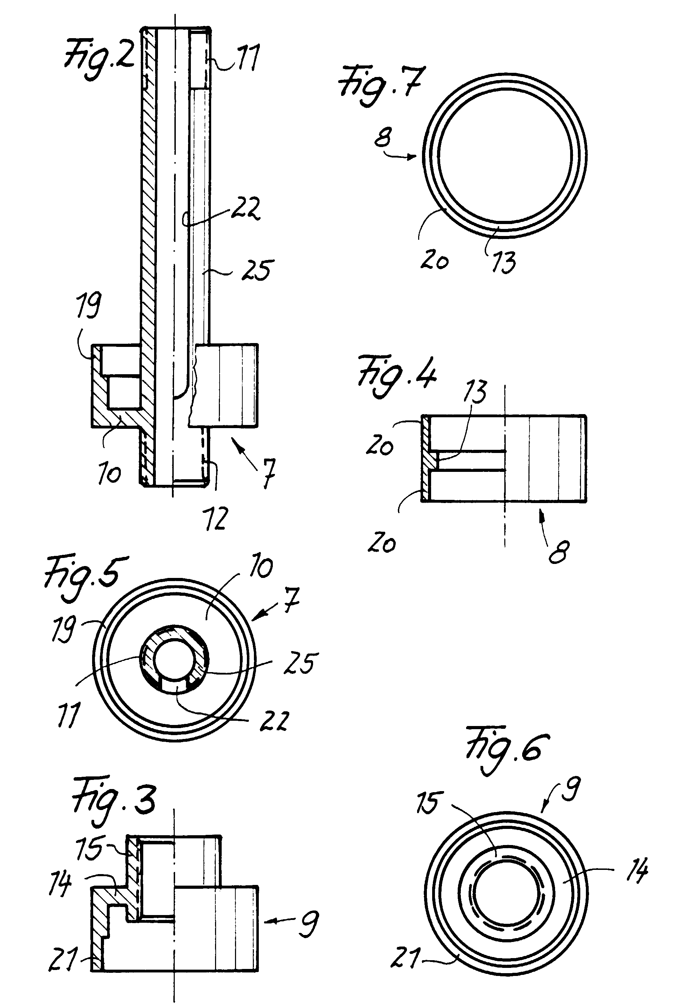

Wie aus Figur 2 und 5 ersichtlich, weist das Rohr 25 des ersten Halterteiles 7 einen von seinem den ersten Halterteil 7 abgewandten Ende bis in die Nähe des ersten Halterteiles 7 reichenden Längsschlitz 22 auf. Dieser Längsschlitz 22 dient zum Einführen und Durchführen von Anschlußlitzen oder anderen flexiblen Anschlußleitern, die von dem entsprechenden Viertelringsegment 16 zum Verbraucher 4 geführt werden können.

Mindestens eines der Vierteilringsegmente 16 des Knotenpunktes 5 einer jeden Leiterebene weist in der dem zweiten Halterteil 8 abgewandten Seite eine Einstecköffnung 23 für das abisolierte Ende einer Anschlußlitze oder dergleichen flexible Leiter auf. Zudem ist eine von radial außen zugängliche, in die Einstecköffnung 23 quer einschraubbare Klemmschraube vorgesehen, wozu eine quer verlaufende Gewindebohrung 24 im Fußbereich der Viertelringsegmente 16 oder der flachen Ringscheibe 17 vorgesehen ist.

Zur Installation des Netzwerkes von Leitern 1 können zunächst die entsprechenden Viertelringsegmente 16 einschließlich der Scheibe 17 in das untere Halterteil 7 eingesetzt werden, wobei ein entsprechender Anschlußleiter in die Öffnung 23 einsetzbar und mittels einer in die Gewindebohrung 24 eingeschraubten Klemmschraube einklemmbar ist, der dann durch den Längsschlitz 22 des Rohres 25 geführt und unten aus dem Bereich 12 des Rohres 25 austreten kann und dort mit einer Lampenfassung oder dergleichen für eine Halogenlampe verbunden werden kann. Eines der Viertelringsegmente 16 gemäß Ausführungform von Figur 8 ist dabei an einen Leiter 1 angeschraubt (im Bereich der Gewindebohrung), während auch in das andere Segment 16 dann ein weiterer Leiter einschraubbar ist. Ebenfalls können in ein zweites solches Element die dazu quer verlaufenden Leiter 1 eingeschraubt werden, und dieses Element in umgekehrter Lage gemäß Darstellung in Figur 8 eingeschachtelt werden, so daß insgesamt ein Ringsegment mit vier Viertelringsegmenten 16 entsteht.

Auf dieses kann dann das zweite Halterteil 8 aufgesetzt werden.

In das zweite Halterteil 8 kann dann ein Element gemäß Figur 8 mit eingeschraubten Leitern 1 der zweiten Leiterebene eingesteckt werden. Anschließend ein zweites solches Element in umgekehrter Orientierung mit angeschraubten Leiterenden eingesetzt werden. Die Verdrahtung kann analog der vorbeschriebenen Ausführungsform erfolgen, wobei dann in die oben befindliche Öffnung 23 das abisolierte Leiterende eingesteckt und mittels einer in die Gewindebohrung 24 eingeschraubten Klemmschraube geklemmt werden kann. Der Leiter kann dann durch den Schlitz 22 ebenfalls nach unten zum Gewindestutzen 22 geführt werden, um dort mit einem Verbraucher, beispielsweise mit der Fassung einer Halogenlampe verbunden zu werden. Anschließend kann das dritte Halterteil 9 aufgeschraubt werden, so daß eine feste Verbindung aller Einzelelemente erreicht ist. Der Zusammenbau eines Netzwerkes gemäß Figur 1 ist damit fortschreitend in einfacher Weise möglich, wobei eine feste mechanische und funktionstüchtige elektrische Verbindung im Bereich der Kreuzungsbereiche 5 erfolgt und zudem eine isolierte Anordnung der beiden Leiterebenen erreicht ist, die durch die übereinander verlegten Leiter 1 aufgespannt ist. Die Befestigungsvorrichtung zur ortsfesten Anordnung des Netzwerkes können beispielsweise Rohre (bei 2) oder Seile (bei 3) sein.

Bei 6 ist eine ortsfest anbringbare Zuleitung für die Stromeinspeisung gezeigt, die zu einem Transformator führt.

In Figur 12 und 13 ist eine Variante eines Verbindungselementes gezeigt. Dabei ist auf das Rohrteil 25 des Halterteiles 7 von oben der Reihe nach eine Ringscheibe 26 aus elektrisch leitendem Material mit einer nach innen ragenden Anschlußfahne 27 aufschiebbar, wobei die Anschlußfahne 27 in den Längsschlitz 22 des Halterteils 7 eingesetzt ist und radial nach innen in das Rohrteil 25 vorragt. Auf diese Scheibe 26 ist ein aus vier Viertelringsegmenten 16 gebildetes Kupplungselement aufgeschoben. Nachfolgend ist das Halterteil 8 und die nächste Lage von vier Viertelringsegmenten 16 aufschiebbar. Oberhalb der Viertelringsegmente 16 oder unterhalb derselben auf den Boden des Halterteils 8 aufgelegt, ist eine weitere Ringscheibe 26 mit nach innen abragender Kontaktfahne 27 angeordnet, die wiederum den Längsschlitz 22 des rohrförmigen Teiles 25 des Halters 7 durchgreift und nach radial innen vorragt. Als Abschluß ist das Halterteil 9 aufgesteckt und gewindemäßig auf das Ende des Rohrteiles 25 aufgeschraubt. In die Gewindebohrungen 18 der Viertelringsegmente sind jeweils Leiter 1 mit Gewindeenden einschraubbar, die vorzugsweise über ihre gesamte Länge gleichbleibenden Kreisquerschnitt aufweisen. Auf den mit Außengewinde 12 versehenen unteren Stutzen des Halterteiles 7 kann eine Schraubenmutter 28 aufgeschraubt sein. Zur Anordnung, Halterung und elektrischen Verbindung eines elektrischen Verbrauchers ist ein Anschlußstift 29 vorgesehen, der an seinem in der Zeichnungsfigur 12 oberen Ende aus elektrisch leitendem Material besteht. Dieses Ende ist mit 30 bezeichnet. Das Ende 30 ist von dem darunter befindlichen rohrförmigen Element 31, welches ebenfalls aus elektrisch leitendem Material besteht, durch ein Isolierstück 32 entkoppelt. Durch den axialen Hohlraum des rohrförmigen Elementes 31 ist ein Anschlußleiter gesteckt, der mit dem Endteil 30 verbunden ist, und mit dem einen Kontakt einer Halogenleuchte 33 mit zwei Sockelkontakte verbunden ist. Der andere Kontakt ist elektrisch leitend mit dem Mantelteil 34 und dieses wiederum elektrisch leitend mit dem rohrförmigen Element 31 verbunden. Bei 35 kann das Element 34 mit dem Element 31 gewindemäßig verbunden sein. Ebenso kann das Isolierstück 32 in das Ende des rohrförmigen Elementes 31 eingeschraubt sein, wobei das elektrisch leitende Endteil 30 fest mit dem Isolierstück verbunden ist.

Am unteren Ende des rohrförmigen Elementes ist ein Anschlagkragen 36 gebildet. Desweiteren ist auf dem Element 34 eine von dem Element 34 durchgriffene Gewindekappe 37 angeordnet. Nach dem Zusammenfügen der Einzelteile 28, 7, 26, 16, 8 und 9, wie aus Figur 13 ersichtlich, kann der elektrische Verbraucher 4 in den Zeichnungsfiguren von unten in das Rohrstück 25 eingeschoben und mittels der Gewindekappe 37 auf dem Gewindestutzen 12 schraubbefestigt werden. Die elektrische Kontaktierung der Leiterebenen mit den entsprechenden Anschlußkontakten des elektrischen Verbrauchers erfolgt mittels des oberen Ringteiles 26 mit Anschlußfahne 27, die am Endteil 30 radial außen unter Vorspannung anliegt sowie mit der Ringscheibe 26 mit Anschlußfahne 27, die am Außenumfang des rohrförmigen Elementes 31 kontaktierend anliegt.

Auf diese Weise ist sehr einfach in den Knotenpunkten 5 jeweils die Anordnung eines elektrischen Verbrauchers 4 in Form einer Halogenlampe möglich.

In Figur 14 und 15 ist eine alternative Ausbildung zu den Kupplungselementen gemäß Figur 8 bis 11 gezeigt. In dieser Ausführungsform besteht jedes Kupplungselement nur aus einem Ringteil 38 mit eingezogenen Enden, damit dieses Ringteil 38 passend von den Halterteilen 7 bis 9 aufgenommen werden kann. Das Ringteil 38 weist zur Fixierung der elektrischen Leiter 1 Einstecköffnungen 39 auf, die in 90°-Anordnung gleichmäßig auf den Umfang verteilt angeordnet sind, so daß ein rechtwinkliger Abgang der Leiter ermöglicht ist. Durch diese Anordnung ist es in einfacher Weise möglich, ein entsprechendes Netzwerk aufzubauen, indem die elektrischen Leiter 1 lediglich in die Einstecköffnungen 39 eingesteckt werden. Zur Fixierung in diesen Einstecköffnungen sind Gewindequerbohrungen 40 vorgesehen, in die Madenschrauben oder dergleichen eingeschraubt werden können, die von radial außen betätigbar sind und deren Spitze in die Durchgangsöffnung 39 einschraubbar ist, so daß der dort befindliche Leiter dauerhaft klemmbefestigt ist.

Die Erfindung ist nicht auf das Ausführungsbeispiel beschränkt, sondern im Rahmen der Offenbarung vielfach variabel.

## Patentansprüche

1. Niedervoltinstallationssystem, bestehend aus mindestens zwei biegesteifen, parallel zueinander verlegbaren elektrischen, isolationsfreien Leitern (1), Befestigungs- und Halterungsvorrichtungen (2,3) zur ortsfesten Anordnung der Leiter (1), einer mit den Leitern (1) verbindbaren Niedervoltstromquelle sowie an den Leitern (1) mindestens mittelbar befestigbaren und mit diesen elektrisch verbindbaren elektrischen Verbrauchern (4), **dadurch gekennzeichnet,** daß die zueinander parallelen, stabförmigen Leiter (1) bezogen auf die jeweilige Montageebene mit Abstand übereinander angeordnet sind, so daß ein Leiter (1) näher zur Montageebene hin und einer weiter von der Montageebene weg parallel zu dieser verläuft, aus einer Vielzahl von solchen Leiterpaaren ein Netzwerk von Leiterpaaren gebildet ist, wobei an den Knotenpunkten (5) die mechanische Halterung und elektrische Verbindung der Leiter (1) jeweils einer Ebene und eine mechanische, elektrisch isolierte Verbindung der Leiter (1) der beiden Ebenen aneinander vorgesehen ist, und die Knotenpunkte (5) wahlweise zusätzlich Halterungseinrichtungen (2,3) zur ortsfesten Befestigung des Installationssystems an der Montageebene und/oder eine Stromeinspeisungsvorrichtung (6) und/oder Halterungsvorrichtungen für elektrische Verbraucher (4) umfassen.

2. System nach Anspruch 1,
**dadurch gekennzeichnet,** daß die Leiter (1) an den Knotenpunkten (5) lösbar befestigt sind.

3. System nach Anspruch 1 oder 2,
**dadurch gekennzeichnet,** daß die Knotenpunkte (5) durch Halter aus Isolierstoff gebildet sind, die aus einem ersten die im Knotenbereich befindlichen Enden der in Einbaulage unteren Leiter (1) untergreifenden Halterteil (7), einem zweiten diese Enden übergreifenden Halterteil (8), welches zudem die im Knotenbereich (5) befindlichen Enden der oberen Leiter (1) untergreift, und einem dritten die Enden der oberen Leiter (1) übergreifenden Halterteil (9) bestehen, wobei die Halterteile (7,8,9) miteinander lösbar verbindbar sind.

4. System nach einem der Ansprüche 1 bis 3,
**dadurch gekennzeichnet,** daß das erste Halterteil (7) aus einer von einem Rohrteil (25) durchsetzten Scheibe (10) besteht, das zweite Halterteil (8) aus einer auf das Rohr (25) aufschiebbaren zweiten Scheibe (13) besteht und das dritte Halterteil (9) aus einer dritten auf das Rohrende aufschraubbaren Scheibe (14) besteht, wobei zwischen den Scheiben die Leiterenden der beiden Leiterebenen einklemmbar sind.

5. System nach einem der Ansprüche 1 bis 4,
**dadurch gekennzeichnet,** daß an den Leiterenden jeweils ein metallisches Ringelement befestigt ist, welches auf das Rohrteil (25) des ersten Halterteils aufschiebbar ist.

6. System nach einem der Ansprüche 1 bis 4,
**dadurch gekennzeichnet,** daß an den Leiterenden jeweils ein metallisches Viertelringsegment (16) befestigt ist, welches zwischen das erste und zweite (7,8) oder zweite und dritte Halterteil (8,9) einsetzbar ist.

7. System nach einem der Ansprüche 1 bis 4 oder 6,
**dadurch gekennzeichnet,** daß jeweils zwei Viertelringsegmente (16) einander diametral gegenüberliegend an einer Seite einer metallischen Ringscheibe (17) befestigt oder mit dieser einstückig ausgebildet sid, so daß zwei solcher Bauteile gegensinnig ineinandersteckbar sind und einander zu einem kompletten Ringelement ergänzen, welches aus vier Viertelringsegmenten (16) und zwei axial dazu außenliegenden Ringscheiben (17) besteht.

8. System nach einem der Ansprüche 1 bis 4 oder 6 oder 7,
**dadurch gekennzeichnet,** daß jedes Viertelringsegment (16) eine aus seinem Mantel offen ausmündende Gewindebohrung (18) aufweist, in die das mit Außengewinde versehene Ende eines im Querschnitt kreisrunden Leiters (1) einschraubbar ist.

9. System nach einem der Ansprüche 1 bis 4 oder 6 bis 8,
**dadurch gekennzeichnet,** daß die Ringsegmente (16) eine Höhe aufweisen, die größer als der Durchmesser der im Querschnitt kreisrunden Leiter (1) ist.

10. System nach einem der Ansprüche 1 bis 9,
**dadurch gekennzeichnet,** daß von der Scheibe (10) des ersten Halterteils (7) in Richtung zum zweiten Halterteil (8) ein radial außenliegender Kragen (19) abragt, in den der Fuß der Viertelringsegmente (16) gegebenenfalls einschließlich der Scheibe (17) einsetzbar ist, daß das zweite Halterteil (8) beidseitig axial abragende, radial außenliegende Kragen (20) aufweist, welcher Bereich auf den Kopf der Viertelringsegmente (16) gegebenenfalls einschließlich der Scheibe (17) der unteren Leiterebene aufsetzbar und in welchen der Fuß der Viertelringsegmente (16) gegebenenfalls einschließlich der Scheibe (17) der oberen Leiterebene einsetzbar ist, und daß das dritte Halterteil (9) einen axial in Richtung zum zweiten Halterteil (8) abragenden radial außenliegenden Kragen (21) aufweist, welcher Bereich auf den Kopf der Viertelringsegmente (16) gegebenenfalls samt der Scheibe (17) der zweiten Leiterebene aufsetzbar ist.

11. System nach Anspruch 10,
**dadurch gekennzeichnet,** daß die Kragen (19-21) jeweils eine nach radial innen vorspringende Rippe aufweisen, die einen Einstecktiefenbegrenzungsanschlag für die Viertelringsegmente (16) bzw. die Scheiben (17) bilden.

12. System nach einem der Ansprüche 1 bis 11,
**dadurch gekennzeichnet,** daß das Rohr (25) des ersten Halterteils (7) einen von seinem dem ersten Halterteil abgewandten Ende bis in die Nähe des ersten Halterteils reichenden Längsschlitz (22) aufweist.

13. System nach einem der Ansprüche 1 bis 12,
**dadurch gekennzeichnet,** daß mindestens eines der Viertelringsegmente (16) des Knotenpunktes (5) einer jeden Leiterebene, vorzugsweise in der dem zweiten Halterteil (8) abgewandten Seite eine Einstecköffnung (23) für das abisolierte Ende einer Anschlußlitze oder dergleichen flexiblen Leiter und eine von radial außen zugängliche, in die Einstecköffnung (23) einschraubbare Klemmschraube aufweist.

14. System nach einem der Ansprüche 1 bis 13,
**dadurch gekennzeichnet,** daß das Rohr (25) des ersten Halterteils (7) über die dem zweiten Halterteil (8) abgewandte Halterseite vorragt und an dem vorragenden Teil ein elektrischer Verbraucher (4), insbesondere eine Halogenlampe samt Fassung, gehaltert oder in diese eingesteckt ist.

15. System nach einem der Ansprüche 1 bis 14,
**dadurch gekennzeichnet,** daß am dem dritten Halterteil (9) zugewandten Ende des Rohres (25) des ersten Halterteils (7) eine Stromeinspeisevorrichtung (6) oder eine Befestigungsvorrichtung (2,3) zur ortsfesten (z.B. deckenseitigen) Befestigung befestigbar ist.

## Claims

1. Low-voltage installation system, comprising at least two bending-resistant, electrical, insulation-free conductors (1) which can be laid in parallel with one another, attachment and mounting devices (2, 3) for the fixed arrangement of the conductors (1), a low-voltage current source which can be connected to the conductors (1), as well as electrical loads (4) which can be attached at least indirectly to the conductors (1) and are electrically connectable to the latter, characterized in that the mutually parallel, rod-shaped conductors (1) are arranged at a distance above one another relative to the respective assembly plane so that one conductor (1) extends more closely to the assembly plane and one extends parallel to it further away from the assembly plane, a network of conductor pairs is formed from a multiplicity of such conductor pairs, the mechanical mounting and electrical connection of the conductors (1) of one plane in each case and a mechanical, electrically insulated connection of the conductors (1) of the two planes to one another being provided at the nodal points (5), and the nodal points (5) optionally comprise, in addition, mounting devices (2, 3) for the fixed attachment of the installation system to the mounting plane and/or a current feeding device (6) and/or mounting devices for electrical loads (4).

2. System according to Claim 1, characterized in that the conductors (1) are detachably attached at the nodal points (5).

3. System according to Claim 1 or 2, characterized in that the nodal points (5) are formed by supports which are composed of insulating material and which comprise a first support part (7) which engages under the ends of the lower conductors (1) situated in the nodal region in the installation position, a second support part (8) which engages over said ends and which, in addition, engages under the ends of the upper conductors (1) situated in the nodal region (5), and a third support part (9) which engages over the ends of the upper conductors (1), the support parts (7, 8, 9) being detachably connectable to one another.

4. System according to one of Claims 1 to 3, characterized in that the first support part (7) comprises a disc (10) penetrated by a tubular part (25), the second support part (8) comprises a second disc (13) which can be pushed onto the tube (25) and the third support part (9) comprises a third disc (14) which can be screwed onto the tube end, it being possible to clamp the conductor ends of the two conductor planes between the discs.

5. System according to one of Claims 1 to 4, characterized in that a metallic ring element which can be pushed onto the tubular part (25) of the first support part is attached to the conductor ends in each case.

6. System according to one of Claims 1 to 4, characterized in that a metallic quarter-ring segment (16) which can be inserted between the first and the second (7, 8) orthe second and third support part (8, 9) is attached to the conductor ends in each case.

7. System according to one of Claims 1 to 4 or 6, characterized in that two quarter-ring segments (16) are each attached in a mutually diametrically opposite manner to one side of a metallic ring disc (17) or are formed integrally with the latter so that two such structural components can be inserted into one another in opposite directions and complement one another to form a complete ring element which comprises four quarter-ring segments (16) and two ring discs (17) situated externally in an axial manner with respect thereto.

8. System according to one of Claims 1 to 4 or 6 or 7, characterized in that each quarter-ring segment (16) has a threaded bore (18) which issues in an open manner from its circumferential surface and into which the end, provided with an external thread, of a conductor (1) which is circular in cross section can be screwed.

9. System according to one of Claims 1 to 4 or 6 to 8, characterized in that the ring segments (16) have a height which is greater than the diameter of the conductors (1) which are circular in cross section.

10. System according to one of Claims 1 to 9, characterized in that a radially external collar (19) into which the base of the quarter-ring segments (16), optionally including the disc (17) can be inserted, extends from the disc (10) of the first support part (7) in the direction of the second support part (8), in that the second support part (8) has radially external collars (20) which extend axially on both sides, which region can be mounted on the head of the quarter-ring segments (16), optionally including the disc (17) of the lower conductor plane, and into which the base of the quarter-ring segments (16), optionally including the disc (17) of the upper conductor plane, can be inserted, and in that the third support part (9) has a radially external collar (21) which extends axially in the direction of the second support part (8), which region can be mounted on the head of the quarter-ring segments (16), optionally together with the disc (17) of the second conductor plane.

11. System according to Claim 10, characterized in that the collars (19 - 21) each have a radially inwardly projecting rib which forms an insertion depth limiting stop for the quarter-ring segments (16) or the discs (17).

12. System according to one of Claims 1 to 11, characterized in that the tube (25) of the first support part (7) has a longitudinal slot (22) which extends from its end remote from the first support part up to the vicinity of the first support part.

13. System according to one of Claims 1 to 12, characterized in that at least one of the quarter-ring segments (16) of the nodal point (5) of each conductor plane has, preferably in the side remote from the second support part (8), an insertion opening (23) for the insulation-stripped end of a connecting wire or similar flexible conductor and a clamping screw which is accessible radially from the outside and which can be screwed into the insertion opening (23).

14. System according to one of Claims 1 to 13, characterized in that the tube (25) of the first support part (7) projects forward over the support side remote from the second support part (8) and an electrical load (4), in particular a halogen lamp together with holder, is mounted on the forward projecting part or is inserted in the latter.

15. System according to one of Claims 1 to 14, characterized in that a current feeding device (6) or an attachment device (2, 3) can be attached for the purpose of fixed attachment (for example, on the ceiling side) at that end of the tube (25) of the first support part (7) that is adjacent to the third support part (9).

## Revendications

1. Système pour installation à basse tension, constitué par au moins deux conducteurs électriques non isolés (1) qui résistent à la flexion et qui peuvent être posés parallèlement entre eux, par des dispositifs de fixation et de maintien (2, 3) destinés au montage à poste fixe des conducteurs (1) et par une source de courant à basse tension qui peut être reliée aux conducteurs (1), ainsi que par des dispositifs électriques d'utilisation (4) qui peuvent être fixés aux conducteurs (1), du moins indirectement, et qui peuvent être reliés électriquement à ceux-ci, caractérisé par le fait qu'en se référant au plan de montage correspondant, les conducteurs (1) en forme de tiges parallèles entre eux sont disposés l'un au-dessus de l'autre et à distance l'un de l'autre, de sorte qu'un conducteur (1) est plus proche du plan de montage et qu'un autre s'étend parallèlement au premier en étant plus éloigné du plan de montage, et qu'un réseau de paires de conducteurs est formé à partir d'une pluralité de telles paires de conducteurs, cependant qu'il est prévu aux noeuds (5) du réseau le maintien mécanique et la liaison électrique des conducteurs (1) d'un plan à chaque fois, ainsi qu'une liaison mécanique et électriquement isolée des conducteurs (1) des deux plans entre eux, et que les noeuds (5) du réseau comprennent de plus au choix des dispositifs de fixation et de maintien (2, 3) destinés à la fixation à poste fixe du système d'installation sur le plan de montage et/ou un dispositif d'alimentation en courant (6) et/ou des dispositifs de maintien destinés à des dispositifs électriques d'utilisation (4).

2. Système selon la revendication 1, caractérisé par le fait que les conducteurs (1) sont fixés aux noeuds (5) du réseau d'une manière amovible.

3. Système selon la revendication 1 ou 2, caractérisé par le fait que les noeuds (5) du réseau sont formés par des supports en matière isolante, ceux-ci étant constitués par une première partie de support (7) venant en prise par-dessous avec les conducteurs (1) qui sont les conducteurs inférieurs dans la position montée, et ce, par leurs extrémités situées dans la région des noeuds, par une deuxième partie de support (8) qui vient en prise par-dessus avec ces extrémités et qui vient en outre en prise par-dessous avec les extrémités des conducteurs supérieurs (1) qui sont situées dans la région des noeuds (5), et par une troisième partie de support (9) qui vient en prise par-dessus avec les extrémités des conducteurs supérieurs (1), cependant que les parties de support (7, 8, 9) peuvent être reliées entre elles d'une manière amovible.

4. Système selon l'une des revendications 1 à 3, caractérisé par le fait que la première partie de support (7) est constituée par un disque (10) qui est traversé par une partie tubulaire (25), que la deuxième partie de support (8) est constituée par un deuxième disque (13) qui peut être enfoncé sur le tube (25), et que la troisième partie de support (9) est constituée par un troisième disque (14) qui peut être vissé sur l'extrémité du tube, cependant que les extrémités des conducteurs des deux plans de conducteurs peuvent être serrées entre les disques.

5. Système selon l'une des revendications 1 à 4, caractérisé par le fait qu'un élément annulaire métallique est fixé à chaque fois aux extrémités des conducteurs, et qu'il peut être enfoncé sur la partie tubulaire (25) de la première partie de support.

6. Système selon l'une des revendications 1 à 4, caractérisé par le fait qu'un segment métallique en quart de cercle (16) est fixé à chaque fois aux extrémités des conducteurs, et qu'il peut être introduit entre la première partie de support et la deuxième (7, 8) ou entre la deuxième et la troisième (8, 9).

7. Système selon l'une des revendications 1 à 4 ou 6, caractérisé par le fait que deux segments en quart de cercle (16) sont à chaque fois fixés en étant diamétralement opposés entre eux sur un côté d'un disque annulaire métallique (17), ou qu'ils sont réalisés d'un seul tenant avec celui-ci, de sorte que deux éléments constitutifs de ce genre peuvent être enfoncés l'un dans l'autre en sens inverse en se complétant mutuellement pour former un élément annulaire complet qui est constitué par quatre segments en quart de cercle (16) et par deux disques annulaires (17) situés à l'extérieur de ceux-ci dans le sens axial.

8. Système selon l'une des revendications 1 à 4 ou 6 ou 7, caractérisé par le fait que chaque segment en quart de cercle (16) comporte un perçage fileté (18) qui débouche librement de sa surface latérale et dans lequel peut être vissée l'extrémité pourvue d'un filetage extérieur d'un conducteur (1) dont la section transversale est circulaire.

9. Système selon l'une des revendications 1 à 4 ou 6 à 8, caractérisé par le fait que les segments annulaires (16) présentent une hauteur qui est supérieure au diamètre des conducteurs (1) dont la section transversale est circulaire.

10. Système selon l'une des revendications 1 à 9, caractérisé par le fait qu'un collet (19) situé à l'extérieur dans le sens radial fait saillie depuis le disque (10) de la première partie de support (7) dans la direction de la deuxième partie de support (8), collet dans lequel peut être introduite la partie inférieure des segments en quart de cercle (16), y compris éventuellement le disque (17), par le fait que la deuxième partie de support (8) présente des collets (20) qui sont situés à l'extérieur dans le sens radial et qui font saillie des deux côtés dans le sens axial, cette région pouvant être enfoncée sur la partie supérieure des segments en quart de cercle (16) du plan de conducteurs inférieur, y compris éventuellement le disque (17), et la partie inférieure des segments en quart de cercle (16) du plan de conducteurs supérieur, y compris éventuellement le disque (17), pouvant être enfoncée dans cette région, et par le fait que la troisième partie de support (9) présente un collet (21) qui est situé à l'extérieur dans le sens radial et qui fait saillie axialement dans la direction de la deuxième partie de support (8), cette région pouvant être enfoncée sur la partie supérieure des segments en quart de cercle (16) du deuxième plan de conducteurs, en même temps que le disque (17), le cas échéant.

11. Système selon la revendication 10, caractérisé par le fait que les collets (19 à 21) présentent chacun une nervure qui fait saillie vers l'intérieur dans le sens radial et qui constitue une butée destinée à limiter la profondeur de l'enfoncement des segments en quart de cercle (16) ou des disques (17), respectivement.

12. Système selon l'une des revendications 1 à 11, caractérisé par le fait que le tube (25) de la première partie de support (7) présente une fente longitudinale (22) qui s'étend depuis son extrémité opposée à la première partie de support pour arriver jusqu'au voisinage de la première partie de support.

13. Système selon l'une des revendications 1 à 12, caractérisé par le fait qu'au moins l'un des segments en quart de cercle (16) du noeud (5) du réseau de chaque plan de conducteurs présente, de préférence dans son côté opposé à la deuxième partie de support (8), une ouverture (23) qui est destinée à l'enfoncement de l'extrémité dénudée d'un fil électrique toronné de raccordement ou d'un conducteur flexible similaire, ainsi qu'une vis de serrage qui est accessible depuis l'extérieur dans le sens radial et qui peut être vissée dans l'ouverture d'enfoncement (23).

14. Système selon l'une des revendications 1 à 13, caractérisé par le fait que le tube (25) de la première partie de support (7) fait saillie au-delà du côté du support qui est opposé à la deuxième partie de support (8), et qu'un dispositif électrique d'utilisation (4), et en particulier une lampe à halogène avec sa douille, est maintenu sur la partie en saillie ou enfoncé dans celle-ci.

15. Système selon l'une des revendications 1 à 14, caractérisé par le fait que peut être fixé à l'extrémité du tube (25) de la première partie de support (7) qui est tournée vers la troisième partie de support (9) un dispositif d'alimentation en courant (6) ou un dispositif de fixation (2, 3) en vue de la fixation à poste fixe (par exemple du côté du plafond).
